# EUROPÄISCHE PATENTSCHRIFT

(11) **EP 2 543 992 B1**
(45) Veröffentlichungstag und Bekanntmachung des Hinweises auf die Patenterteilung: **26.12.2018**
(21) Anmeldenummer: 12173790.2
(22) Anmeldetag: 27.06.2012
(51) Int. Cl.: G01N 25/16, G01B 11/16

(54) **Dilatometer zur Messung von metallischen Proben**
Dilatometer for measuring metallic samples
Dilatomètre pour la mesure d'échantillons métalliques

(30) Priorität: 05.07.2011 DE 102011051561
(43) Veröffentlichungstag der Anmeldung: 09.01.2013
(73) Patentinhaber: Waters GmbH, 65760 Eschborn (DE)
(72) Erfinder: Bähr, Heinz-Ludwig, 32547 Bad Oeynhausen (DE)
(74) Vertreter: Dantz, Jan Henning

(56) Entgegenhaltungen:
- DE-A1- 10 309 284
- DE-A1-102006 019 433
- DE-C- 537 038
- US-A- 3 805 589
- US-A- 5 362 151
- US-A1- 2003 108 082
- NEUBERT H ET AL: "A high-speed interferometric dilatometer based on the inductive heating of a specimen; A high-speed interferometric dilatometer", MEASUREMENT SCIENCE AND TECHNOLOGY, IOP, BRISTOL, GB, Bd. 20, Nr. 4, 1. April 2009 (2009-04-01), Seiten 1-5, XP020152633, ISSN: 0957-0233, DOI: 10.1088/0957-0233/20/4/045102
- RUBAN V V ET AL: "NONCONTACT STRAIN GAUGE IN A HIGH-TEMPERATURE DILATOMETER", MEASUREMENT TECHNIQUES, CONSULTANTS BUREAU. NEW YORK, US, Bd. 34, Nr. 3, 1. März 1991 (1991-03-01), Seiten 265-269, XP000271351, ISSN: 0543-1972, DOI: 10.1007/BF00978798

## Beschreibung

Die vorliegende Erfindung betrifft ein Dilatometer zur Messung von metallischen Proben nach dem Oberbegriff des Anspruches 1.

Es gibt Dilatometer, bei denen eine metallische Probe in Längsrichtung zwischen zwei Stempeln eingespannt wird. Durch eine Induktionsspule wird die Probe aufgeheizt und die Längenänderung mit Hilfe der beiden Stempeln gemessen. Zudem wird die Probentemperatur in einem mittleren Bereich der Probe erfasst. Bei einem solchen Dilatometer ist nachteilig, dass an den Kontaktflächen zu den Stempeln Wärme aus der Probe abfließt und dadurch ein Temperaturgradient innerhalb der Probe entsteht, so dass die Korrelation zwischen gemessener Temperatur und Längenänderung beeinflusst wird. Insbesondere bei zu untersuchenden Phasenumwandlungen kann dies dazu führen, dass diese innerhalb der Probe nicht zeitgleich ablaufen, da die Phasenumwandlung z. B. in einem mittleren Bereich schon beendet ist, während sie in den Randbereichen der Probe erst startet. Ungleichförmigkeiten des Induktionsfeldes beeinflussen diesen Temperaturgradienten zusätzlich negativ. Die Messungen bei solchen Dilatometern ist, da die Phasenumwandlung nicht einwandfrei detektiert werden kann, mit Fehlern behaftet was sich gerade bei hohen Aufheiz- und Abkühlgeschwindigkeiten bemerkbar macht.

Die US 5,362,151 offenbart ein Dilatometer zum Messen einer Längenänderung einer Probe, wobei die Probe an einem Probenhalter in einem Ofen positioniert wird. Der zylindrische Ofen wird über eine Heizspule beheizt, wobei eine temperaturabhängige Längenausdehnung über optische Erfassungsmittel gemessen werden kann. Ein ähnliches optisches Dilatometer ist auch in der DE 10 2006 019 433 beschrieben.

In der US 2003/0108082 wird ein optisches Dilatometer mit zwei optischen Systemen beschrieben, wobei eine zu vermessende Probe in einem rohrförmigen beheizbaren Ofen abgelegt ist.

Die DE 103 09 284 offenbart ein Dilatometer, bei dem eine Längenausdehnung der Probe mit einem Fühlstempel erfasst wird. Zudem ist ein optisches System zur Erfassung der Längenausdehnung vorgesehen. An dem Fühlstempel kann
Die US 5,362,151 offenbart ein Dilatometer zum Messen einer Längenänderung einer Probe, wobei die Probe an einem Probenhalter in einem Ofen positioniert wird. Der zylindrische Ofen wird über eine Heizspule beheizt, wobei eine temperaturabhängige Längenausdehnung über optische Erfassungsmittel gemessen werden kann. Ein ähnliches optisches Dilatometer ist auch in der DE 10 2006 019 433 beschrieben.

In der US 2003/0108082 wird ein optisches Dilatometer mit zwei optischen Systemen beschrieben, wobei eine zu vermessende Probe in einem rohrförmigen beheizbaren Ofen abgelegt ist.

Die DE 103 09 284 offenbart ein Dilatometer, bei dem eine Längenausdehnung der Probe mit einem Fühlstempel erfasst wird. Zudem ist ein optisches System zur Erfassung der Längenausdehnung vorgesehen. An dem Fühlstempel kann Wärme aus der Probe abfließen, so dass sich ein Temperaturgradient in dem Übergangsbereich ausgebildet. Dadurch wird die Korrelation zwischen gemessener Temperatur und Längenänderung beeinflusst. Das in diesem Dokument beschriebene Dilatometer wird auch in dem Aufsatz "A high-speed interferometric dilatometer based on the inductive heating of a specimen" erörtert, der in der Zeitschrift Measurement Science and Technology veröffentlicht ist.

Ein weiteres Messverfahren mit einem Dilatometer wird in dem Zeitschriften Artikel "Noncontact strain gauge in a high-temperature dilatometer" beschrieben, das in der Zeitschrift Measurement Techniques Consultants Bureau 1991 veröffentlicht wurde.

Wärme aus der Probe abfließen, so dass sich ein Temperaturgradient in dem Übergangsbereich ausgebildet. Dadurch wird die Korrelation zwischen gemessener Temperatur und Längenänderung beeinflusst. Das in diesem Dokument beschriebene Dilatometer wird auch in dem Aufsatz "A high-speed interferometric dilatometer based on the inductive heating of a specimen" erörtert, der in der Zeitschrift Measurement Science and Technology veröffentlicht ist.

Ein weiteres Messverfahren mit einem Dilatometer wird in dem Zeitschriften Artikel "Noncontact strain gauge in a high-temperature dilatometer" beschrieben, das in der Zeitschrift Measurement Techniques Consultants Bureau 1991 veröffentlicht wurde.

Es ist daher Aufgabe der vorliegenden Erfindung, ein Dilatometer zur Messung von metallischen Proben zu schaffen, mittels dem eine exakte Messung der temperaturabhängigen Längenänderung möglich ist.

Diese Aufgabe wird mit einem Dilatometer mit den Merkmalen des Anspruches 1 gelöst.

Erfindungsgemäß umfasst das Dilatometer eine optische Messeinrichtung zur Erfassung einer Längenänderung der Probe. Dadurch ist es möglich, eine berührungslose Messung einer Längenänderung vorzunehmen. Durch diese berührungslose Messung erfolgt kein Wärmeabfluss an der Messstelle. Zudem lässt sich die Längenänderung mit der optischen Messeinrichtung mit hoher Genauigkeit durchführen.

Gemäß der Erfindung erfasst die optische Messeinrichtung eine Längenänderung in einer Messebene und der Messfühler zum Messen der Temperatur der Probe misst die Temperatur im Bereich dieser Ebene. Dadurch kann selbst bei einem in Längsrichtung vorliegenden Temperaturgradienten eine exakte Längenänderungsmessung durchgeführt werden, da die Messung der Temperatur im Bereich der Messung der Längenänderung stattfindet. Messung der "Längenänderung" bedeutet in diesem Zusammenhang nicht unbedingt eine Messung in Längsrichtung einer Probe, sondern in irgendeiner Richtung der Probe, vorzugsweise quer zu einer Längsrichtung der Probe. Der Messfühler kann die Temperatur im Bereich der Messebene der optischen Messeinrichtung erfassen, wobei im Bereich auch einen geringfügigen Abstand des Messfühlers von der Messebene erfassen soll, der die Messung nicht nachteilig beeinflusst.

Gemäß einer weiteren Ausgestaltung der Erfindung weist die optische Messeinrichtung einen Sender und einen Empfänger und mindestens einen Messfühler zum Messen der Temperatur auf, welcher sich im Schatten der optischen Messeinrichtung an der dem Empfänger zugewandten oder abgewandten Seite der Probe befindet. Dadurch kann eine Temperaturmessung exakt in der Messebene erfolgen, wobei der Messfühler die optische Messeinrichtung nicht stört da er sich im Schatten oder der dem Sender zugewandten Seite befindet. Lediglich die durch die optische Messeinrichtung vermessenen Randbereiche der Probe sollten von dem Messfühler frei gehalten werden.

Bei der optischen Messeinrichtung kann als Sender eine Lichtquelle mit einem Kollimator zur Erzeugung eines parallelen Strahlenganges eingesetzt werden. Als Empfänger können Sensoren eingesetzt werden, die das Schattenbild der Probe erfassen, beispielsweise ein Hochgeschwindigkeits- Linear-CCD-Sensor. Der Messfühler zum Messen der Temperatur kann daher im "Schattenbereich" der optischen Messeinrichtung die Probe kontaktieren und behindert so nicht die Messung einer Längenänderung.

Vorzugsweise ist der Messfühler als Thermoelement ausgebildet, das mit der Spitze an der Probe fixiert ist. Aufgrund des geringen Querschnittes der Leiter der Thermoelemente beeinflussen diese nicht nachhaltig die Temperatur der Probe.

Die mindestens eine Induktionsspule weist in einem mittleren Bereich einen Spalt auf und eine Messebene der optischen Messeinrichtung ist im Bereich dieses Spaltes angeordnet. Dadurch kann die Messebene senkrecht zu einer Längsrichtung der Probe ausgerichtet werden, wobei lediglich die Steigung der Induktionsspule in dem Bereich des Spaltes geringfügig erhöht wird, um Platz für eine Messebene der optischen Messeinrichtung zu schaffen. Die mindestens eine Induktionsspule kann beliebige Formen besitzen. Vorzugsweise werden Rundspulen, aber auch Flachspulen und speziell angepasste Spulen verwendet, welche für die optische Messeinrichtung im mittleren Bereich einen Spalt auf weisen damit der Messstrahl ungehindert die Längenänderung der Probe erfassen kann. Es ist zudem auch möglich, eine spiralförmige Induktionsspule mit einer gleichmäßigen Wicklung zu versehen und die Messebene im Wesentlichen parallel zu der Steigung der Wicklung auszurichten, so dass auf die Anordnung eines breiteren Spaltes im Bereich der Induktionsspule verzichtet werden kann.

Zusätzlich umfasst der Probenhalter zwei Stempel bzw. Übertragungsstangen, zwischen denen die Probe in eine Längsrichtung einspannbar ist. Dabei kann über die Übertragungsstangen auch eine Längenänderung in Längsrichtung der Probe erfassbar sein. Zusätzlich kann die optische Messeinrichtung dann eine Messung senkrecht zur Längsrichtung durchführen.

Die Erfindung wird nachfolgend anhand eines Ausführungsbeispiels mit Bezug auf die beigefügten Zeichnungen näher erläutert. Es zeigen:
- Figur 1: eine schematische Ansicht eines erfindungsgemäßen Dilatometers;
- Figur 2: eine vergrößerte Detailansicht des Dilatometers der Figur 1 im Bereich der Probe;
- Figur 3: eine vergrößerte Ansicht der Probe im Bereich des Probenhalters mit einem Temperaturprofil;
- Figur 4: eine Ansicht des Dilatometers der Figur 1 mit einem modifizierten Probenhalters, und

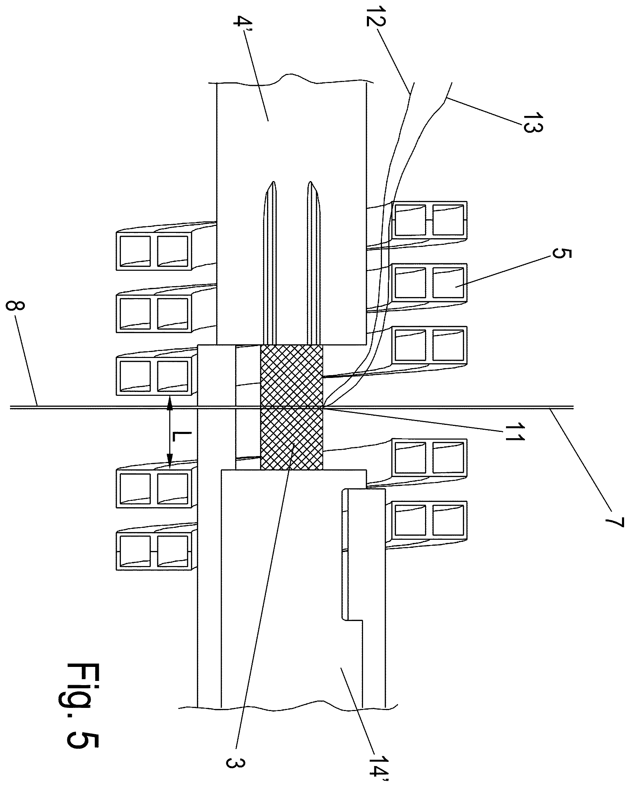

- Figur 5: eine Ansicht des Dilatometers der Figur 4 im Bereich der Probe.

Ein Dilatometer 1 umfasst einen Probenraum 2 innerhalb eines Gehäuses, wobei eine metallische Probe 3 in einem Probenhalter eingespannt ist, der durch einen ersten Stempel 4 und einen zweiten Stempel 14 gebildet ist. Die Probe 3 kann ein zylindrischer Stab, Rohr, Quader, Polygon oder ein anderer geometrischer Körper sein. Nachfolgend wird als Längsrichtung die Richtung verstanden, die entlang der Längsachse der Stempel 4 und 14 verläuft.

Der Probenraum 2 kann mit einem Schutzgas und/oder Vakuum werden, thermisch isoliert sein und andere Funktionalitäten haben, die hier nicht näher beschrieben werden.

Zur Messung einer Längenänderung der Probe 3 ist eine optische Messeinrichtung mit einem Sender 6 und einem Empfänger 9 vorgesehen. Der Sender 6 umfasst eine Lichtquelle, beispielweise eine Hochleistungs-GaN-LED, die ein Licht mit konstanter Wellenlänge ausstrahlt, das dann über ein optisches System, beispielsweise mit einem Kollimator und einem Diffusor, auf die Probe 3 gerichtet wird. Dadurch wird ein bandförmiger Strahlengang 7 von dem Sender 6 emittiert, der in einem mittleren Bereich der Probe 3 auftrifft, also in einem Bereich zwischen ca. 30 % und 70 % der gesamten Länge der Probe 3.

Auf der der Probe 3 abgewandten Seite trifft ein bandförmiger Strahlengang 8 auf einen Empfänger 9 auf, wobei der bandförmige Strahlengang 8 ein Schattenbild der Probe 3 in den Empfänger 9 projiziert. Als Empfänger kann ein optischer Sensor zur exakten Erfassung der Länge der Probe 3 im Bereich der Messebene angeordnet sein, wobei die Messebene durch den bandförmigen Strahlengang 7 und 8 gebildet ist. Die Messebene der optischen Messeinrichtung ist dabei im Wesentlichen senkrecht zur Längsrichtung der Probenhalter 4 und 14 ausgerichtet.

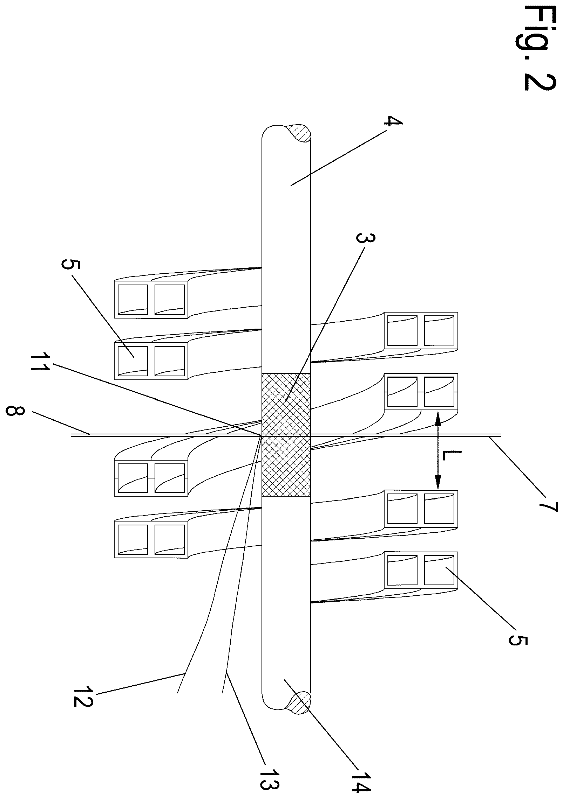

Um die Probe 3 ist in dem Probenraum 2 eine Induktionsspule 5 angeordnet, die sich in Längsrichtung über die Probe 3 hinaus erstreckt. Über die Induktionsspule 5 kann die Probe 3 mit hoher Geschwindigkeit beheizt werden, beispielsweise mit über 1.000 K/s.
Ferner kann beim Erhitzen oder Abkühlen der Probe 3 eine Längenänderung in Längsrichtung der Probe 3 erfasst werden, da ein Wegaufnehmer 10 vorgesehen ist, der mit dem zweiten Stempel 14 verbunden ist, wobei eine Bewegung des zweiten Stempels 14 gemessen wird. Der erste Stempel 4 ist feststehend ausgebildet.
Wie in der vergrößerten Ansicht der Figur 2 gezeigt ist, befindet sich an der Probe 3 ein Messfühler 11 in Form eines Thermoelementes, das mit einer Spitze an der Probe 3 festgelegt ist, beispielsweise durch Punktschweißen. Das Thermoelement 11 umfasst einen ersten Leiter 12 und einen zweiten Leiter 13, deren Querschnitte im Verhältnis zur Probe 3 sehr gering ausgebildet sind, so dass ein Wärmeabfluss durch die Leiter 12 und 13 vernachlässigbar ist.
Die Spitze des Thermoelementes 11 ist im Schattenbereich der Probe 3 im Bereich der Messebene der optischen Messeinrichtung angeordnet, die dem Empfänger 9 zugewandt ist. Dadurch wird die Temperatur der Probe 3 relativ exakt an der Position erfasst, an dem auch die Messung der Längenänderung durch die optische Messeinrichtung erfolgt. Vorzugsweise ist der Thermofühler 11 exakt im Bereich der Messebene angeordnet.
Zum Erhitzen der Probe 3 ist die Induktionsspule 5 um die Probe 3 gewickelt, wobei auch Flachspulen oder andere der Situation angepassten Spulenformen eingesetzt werden können. Im Bereich der optischen Messeinrichtung bzw. der Messebene zwischen zwei benachbarten Wicklungen der Induktionsspule 5 ist ein Spalt L ausgebildet. In diesem Spalt L ist die Steigung der Wicklung etwas größer gewählt, damit der Strahlengang 7 in einer Ebene auf die Probe 3 auftreffen kann und zudem der Strahlengang 8 ohne Beeinflussung einer Wicklung vom Empfänger 9 empfangen werden.

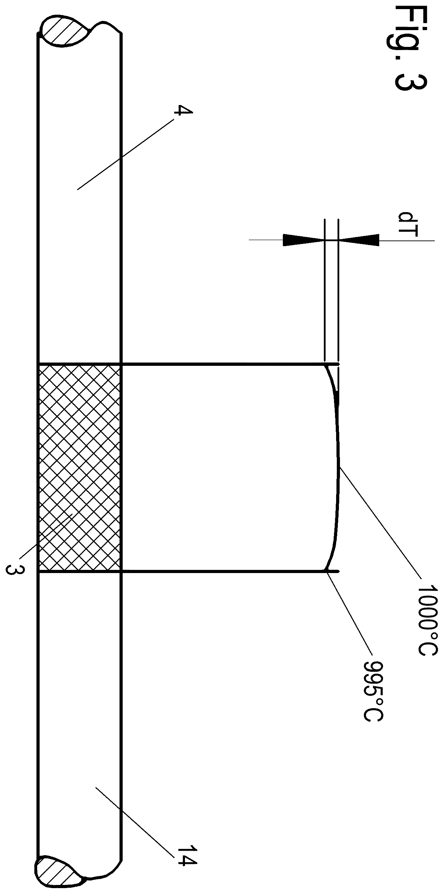

In Figur 3 ist die Probe 3 zwischen dem ersten Stempel 4 und dem zweiten Stempel 14 des Probenhalters eingespannt. Die Probe 3 wurde durch die Induktionsspule 5 erhitzt, und wie zu erkennen ist, besitzt die Probe 3 in einem mittleren Bereich eine Temperatur von 1.000 °C, während in den Randbereichen ein Wärmeabfluss an dem ersten Stempel 4 und dem zweiten Stempel 14 erkennbar ist, so dass dort lediglich eine Temperatur von 995 °C vorhanden ist. Diese Temperaturdifferenz dT kann bei dem vorliegenden Dilatometer zu keinen Messungenauigkeiten führen, da die Messebene der optischen Messeinrichtung und der Messfühler zum Messen der Temperatur der Probe in einem mittleren Bereich der Probe 3 angeordnet sind, in dem kein Temperaturabfluss an den Probenhalter 4 und 14 mehr vorliegt. Dadurch kann gerade bei der Phasenumwandlung einer metallischen Probe z. B. zwischen Hochtemperaturphase (Austenit) und Niedrigtemperaturphase (Martensit) eine exakte temperaturabhängige Längenänderungsmessung erfolgen.

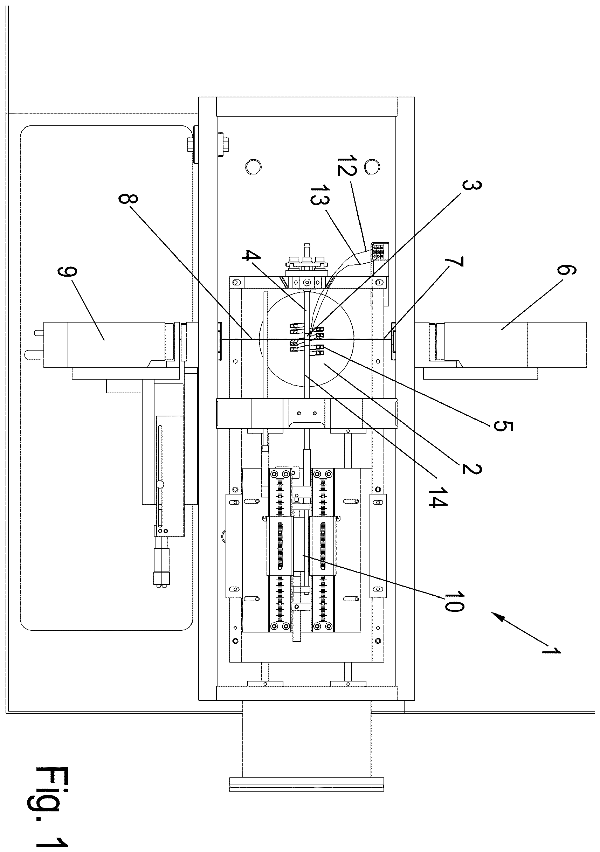

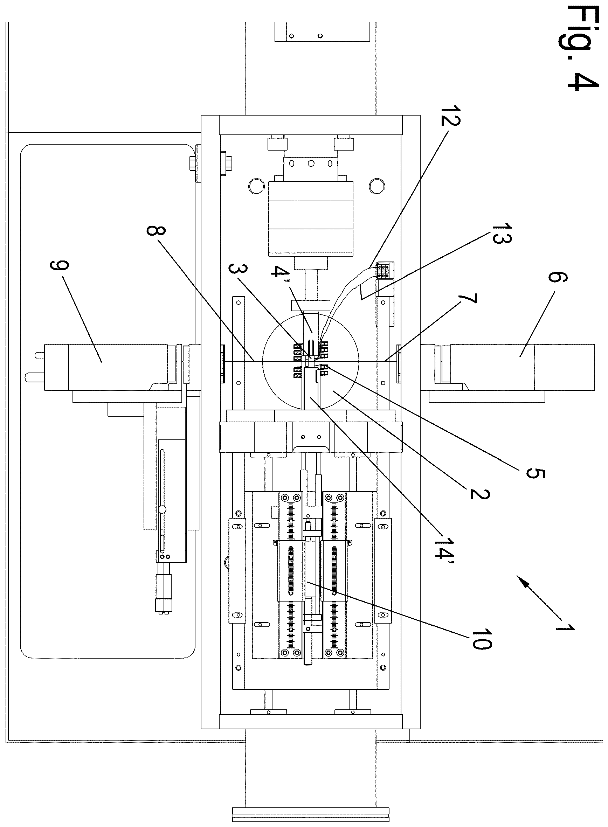

Während das Dilatometer 1 in den Figuren 1 und 2 in einem Abschreckmodus gezeigt ist, bei dem sich die Probe 3 infolge einer Temperaturänderung ausdehnt oder zusammenzieht, ist in Figur 4 das Dilatometer 1 der Figur 1 in einem Deformationsmodus dargestellt. Dabei sind dieselben Bauteile mit denselben Bezugszeichen bezeichnet. Im Deformationsmodus wird als Probenhalter ein erster Stempel 4' und ein zweiter Stempel 14' eingesetzt, die einen gegenüber der Probe 3 deutlich größeren Querschnitt besitzen. Dadurch kann die Probe 3 bei beliebigen Temperaturen gestaucht und anschließend rasch abgekühlt werden, um beispielsweise ein Zeit-Temperatur-Umwandlungsschaubild zu erzeugen. Durch die Induktionsspule 5 kann die Probe 3 erhitzt werden, während durch ein Umspülen der Probe 3 mit Gas, abgekühlt werden. Durch die optische Messeinrichtung mit dem Sender 6 und dem Empfänger 9 kann eine Längenänderung abhängig von der Temperatur gemessen werden.

Im Bereich der Messebene ist ein Temperaturfühler 11 vorgesehen, der entsprechend Figur 2 ausgebildet ist und auf der Seite des Senders 6 angeordnet ist, allerdings in einem mittigen Bereich der Probe 3 und nicht in den Randbereichen, die von der optischen Messeinrichtung erfasst werden.

## Patentansprüche

1. Dilatometer (1) zur Messung von metallischen Proben, umfassend:
a) einen Probenhalter (4, 14), an dem eine Probe (3) fixierbar ist,
b) mindestens einer an der Probe (3) angeordneten Induktionsspule (5) zum Erhitzen der Probe (3),
c) mindestens einen Messfühler (11) zum Messen der Temperatur der Probe (3), wobei
d) eine optische Messeinrichtung (6, 9) zur Erfassung einer Längenänderung der Probe (3) vorgesehen ist,
wobei der Probenhalter zwei Stempel (4, 14; 4', 14') umfasst, zwischen denen die Probe (3) in eine Längsrichtung einspannbar ist, die mindestens eine Induktionsspule (5) in einem mittleren Bereich einen Spalt (L) aufweist und eine Messebene der optischen Messeinrichtung im Bereich des Spaltes (L) angeordnet ist und die Messebene der optischen Messeinrichtung (6, 9) senkrecht zur Längsrichtung ausgerichtet ist und die optische Messeinrichtung (6, 9) eine Längenänderung in dieser Messebene erfasst und der Messfühler (11) die Temperatur der Probe (3) genau im Bereich dieser Ebene misst.

2. Dilatometer nach Anspruch 1, **dadurch gekennzeichnet, dass** die optische Messeinrichtung einen Sender (6) und einen Empfänger (9) aufweist und der Messfühler (11) zum Messen der Temperatur an der dem Empfänger (9) zugewandten Seite die Probe (3) kontaktiert.

3. Dilatometer nach Anspruch 1 oder 2, **dadurch gekennzeichnet, dass** der Messfühler (11) als Thermoelement ausgebildet ist, das mit der Spitze an der Probe (3) fixiert ist.

## Claims

1. Dilatometer (1) for measuring metallic samples, comprising:
a) a sample holder (4, 14), to which a sample (3) can be fixed,
b) at least one induction coil (5) arranged at the sample (3) for heating the sample (3),
c) at least one sensor (11) for measuring the temperature of the sample (3), wherein
d) an optical measuring device (6, 9) is provided for detecting a change in length of the sample (3),
wherein
the sample holder comprises two rams (4, 14; 4', 14'), between which the sample (3) can be clamped in a longitudinal direction, the at least one induction coil (5) has a gap (L) in a central region and a measurement plane of the optical measuring device is arranged in the region of the gap (L), and the measurement plane of the optical measuring device (6, 9) is oriented perpendicular to the longitudinal direction, and the optical measuring device (6, 9) detects a change in length in said measurement plane, and the sensor (11) measures the temperature of the sample (3) specifically in the region of said plane.

2. Dilatometer according to claim 1, **characterized in that** the optical measuring device has a transmitter (6) and a receiver (9), and the sensor (11) for measuring the temperature makes contact with the sample (3) on the side facing towards the receiver (9).

3. Dilatometer according to claim 1 or 2, **characterized in that** the sensor (11) is designed as a thermocouple, which is fixed by the tip to the sample (3).

## Revendications

1. Dilatomètre (1) pour la mesure d'éprouvettes métalliques, comprenant :
a) un support d'éprouvette (4, 14) sur lequel une éprouvette (3) peut être fixée,
b) au moins une bobine d'induction (5) disposée sur l'éprouvette (3) pour chauffer l'éprouvette (3),
c) au moins une sonde de mesure (11) pour mesurer la température de l'éprouvette (3),
d) une installation de mesure optique (6, 9) étant prévue pour détecter le changement de longueur de l'éprouvette (3),
dans lequel le support d'éprouvette comprend deux poinçons (4, 14 ; 4', 14') entre lesquels l'éprouvette (3) peut être serrée dans le sens de la longueur, l'au moins une bobine d'induction (5) présente un intervalle (L) dans une partie médiane et un plan de mesure de l'installation de mesure optique est disposé au niveau de l'intervalle (L) et le plan de mesure de l'installation de mesure optique (6, 9) est orienté perpendiculairement au sens de la longueur et l'installation de mesure optique (6, 9) détecte un changement de longueur dans ce plan de mesure et la sonde de mesure (11) mesure la température de l'éprouvette (3) exactement au niveau de ce plan.

2. Dilatomètre selon la revendication 1, **caractérisé en ce que** l'installation de mesure optique comporte un émetteur (6) et un récepteur (9) et la sonde de mesure (11) vient en contact avec la face de l'éprouvette (3) tournée vers le récepteur (9) pour la mesure de la température.

3. Dilatomètre selon la revendication 1 ou 2, **caractérisé en ce que** la sonde de mesure (11) est conformée comme un thermocouple qui est fixé par la pointe sur l'éprouvette (3).
